# EUROPEAN PATENT APPLICATION

(11) **EP 4 841 825 A1**
(43) Date of publication of application: **18.11.2026**
(21) Application number: 25864563.9
(22) Date of filing: 17.10.2025
(51) Int. Cl.: H01Q 3/26, B64G 1/24, B64G 1/66, H04B 7/0413, H04B 7/06, H04B 7/08

(54) **PHASED ARRAY ANTENNA AND CALIBRATION METHOD**

(30) Priority: 21.03.2025 JP 2025046217
(71) Applicant: Interstellar Technologies Inc., Hiroo-gun, Hokkaido 089-2113 (JP)
(72) Inventor: MORIOKA Sumio, Hiroo-gun Hokkaido 0892113 (JP)
(74) Representative: Hoffmann Eitle
(86) International application number: PCT/JP2025/036678
(87) International publication number: WO 2026/196650

(57) **Abstract**

A non-wired type phased array antenna, the phase control of which in communication is easy, is provided. The phased array antenna includes a plurality of first flying objects disposed in an array state on a same plane and at least one second flying object, wherein each first flying object of the plurality of first flying objects includes a first transmission / reception part disposed along the same plane and a first adjustment mechanism which adjusts relative positions and attitudes between the flying objects, wherein the second flying object includes a second adjustment mechanism which adjusts relative positions and attitudes between the flying objects and which is disposed along alignment of the first adjustment mechanism of each of the plurality of first flying objects, and a first communication part, which is separated from the second adjustment mechanism only by a predetermined distance in a direction crossing the same plane on a side of the first transmission / reception parts of the plurality of first flying objects, and the relative position of which with respect to the second adjustment mechanism is fixed, and moreover which performs communication with the first transmission / reception part of at least one first flying object in the plurality of first flying objects.

## Description

### Technical Field

The present invention relates to a phased array antenna and a calibration method.

### Background Art

It has been proposed that a large number of small-sized satellites are disposed in space to implement a formation flight and have the small-sized satellites perform wireless communication thereamong such that the small-sized satellites function as phased array antennas without being wired. For example, Patent Literature 1 describes that a phased array antenna system is constituted of a plurality of small-sized satellites, and communication between communication devices on the ground is relayed.

### Citation List

### Patent Literature

Patent Literature 1: Japanese Patent No. 7416468

### Summary of Invention

### Technical Problem

Also in a non-wired array antenna using a small-sized satellite as above, it is necessary to perform calibration, synthesizing of signals and the like, similarly to the conventional connected-type array antenna.

However, in the non-wired array antenna disclosed in Patent Literature 1, since antenna elements are not physically connected, and since there is disturbance on an orbit, or other reasons, relative positions of the antenna elements are not fixed and thus, phase control in communication between each of the antenna elements and other satellites executing control or the like becomes complicated. Therefore, there has been a problem in that, for instance, simultaneous transmission of a signal to each of the antenna elements from a satellite executing control or the like, or simultaneous reception of a signal from each of the antenna elements becomes difficult.

Thus, one object of the present disclosure is to provide a non-wired phased array antenna in which phase control in communication is easy.

### Solution to Problem

A phased array antenna according to an aspect of this disclosure includes: a plurality of first flying objects disposed in an array state on a same plane; and at least one second flying object, wherein each first flying object in the plurality of first flying objects includes: a first transmission / reception part disposed along the same plane; and a first adjustment mechanism which adjusts relative positions and attitudes among the flying objects; the second flying object includes: a second adjustment mechanism which adjusts the relative positions and attitudes among the flying objects and which is disposed along the alignment of the first adjustment mechanism of each of the plurality of first flying objects; and a first communication part separated only for a predetermined distance in a direction crossing the same plane from the second adjustment mechanism on a side of the first transmission / reception parts of the plurality of first flying objects, and the relative position of which with respect to the second adjustment mechanism is fixed, and moreover which performs communication with the first transmission / reception part of at least one first flying object in the plurality of first flying objects.

### Advantageous Effect of Invention

According to the present disclosure, it is possible to provide a non-wired phased array antenna in which phase control in communication is easy.

### Brief Description of Drawings

[Figure 1] Figure 1 is a conceptual diagram for explaining an outline of a phased array antenna according to this Embodiment.
[Figure 2] Figure 2 is a plan view of the phased array antenna according to this Embodiment.
[Figure 3] Figure 3 is a schematic diagram of an array element satellite according to this Embodiment.
[Figure 4] Figure 4 is a block diagram illustrating a configuration of the array element satellite according to this Embodiment.
[Figure 5] Figure 5 is a schematic diagram of a control satellite according to this Embodiment.
[Figure 6] Figure 6 is a block diagram illustrating a constitution of the control satellite according to this Embodiment.
[Figure 7] Figure 7 is a sequence diagram illustrating calibration processing.

### Description of Embodiments

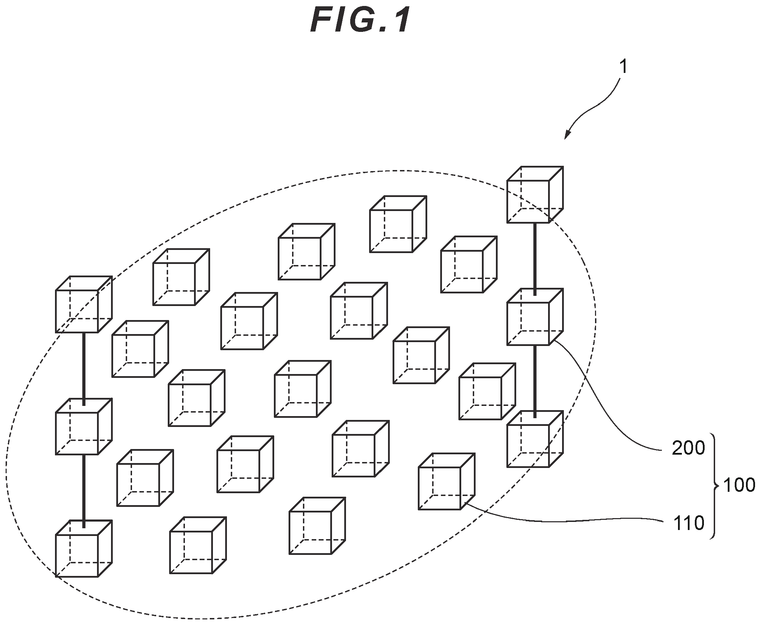

Constitution of the phased array antenna in this Embodiment will be explained with reference to Figure 1 to Figure 6. In the following, drawings of the Embodiment are exemplification, and dimensions and shapes of each part are schematic, and it should not be interpreted such that a technical range of the present invention is limited to the Embodiment.

In each of the drawings, an orthogonal coordinate system constituted by an X-axis, a Y-axis, and a Z-axis is given in some cases for convenience. Directions in parallel to the X-axis, the Y-axis, and the Z-axis are referred to as an X-axis direction, a Y-axis direction, and a Z-axis direction, respectively. A plane specified by the X-axis and the Y-axis shall be referred to as an XY plane. It is to be noted that, for convenience, a side in the Z-axis positive direction (direction of an arrow) shall be assumed to be an upper-sky side, upper or upward, and a side in the Z-axis negative direction (direction opposite to the arrow) shall be assumed to be a ground side and down or downward in the explanation.

### (1) Outline of Phased Array Antenna 1

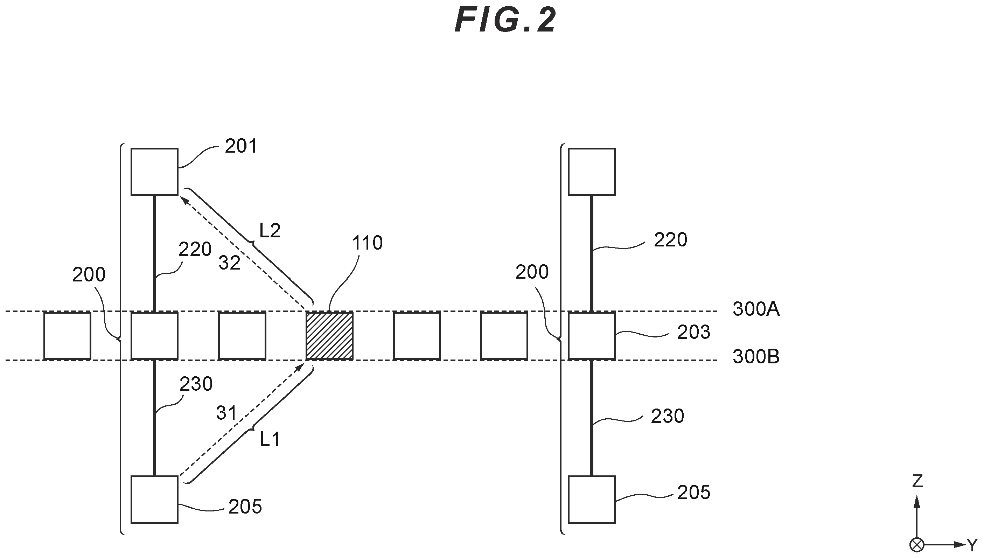

Figure 1 is a conceptual diagram for explaining an outline of a phased array antenna 1 according to this Embodiment. Figure 2 is a plan view of the phased array antenna 1 according to this Embodiment. The phased array antenna 1 includes a plurality of array element satellites 110 (one example of the first flying object) and at least one control satellite 200 (an example of the second flying object).

The plurality of array element satellites 110 provided in the phased array antenna 1 are disposed so as to follow the XY plane. At least some of the array element satellites 110 may be disposed in the array state. A method of disposing the array element satellites 110 is not particularly limited, and the disposition may be linear, planar, a lattice, concentric or the like, for example. The control satellite 200 may be disposed in the array state together with at least some of the array element satellites 110 provided in the phased array antenna 1.

In this Embodiment, as the array element satellite 110, an ultrasmall-sized satellite is used. The array element satellite 110 and the control satellite 200 are collectively called a "satellite 100" in some cases. For example, the size of one unit of the satellite 100 is several cm to several tens of cm. The total number N of the satellites 100 constituting the phased array antenna 1 is not particularly limited. The total number N of the satellites 100 may be several hundreds, several thousands or several tens of thousands or more. A distance between the adjacent satellites 100 is several cm to several tens of cm. A distance between the adjacent satellites 100 may be approximately a wavelength or may be shorter than the wavelength (example: assumed frequency band = 0.8 GHz to 60 GHz). The altitude of each of the satellites 100 is approximately several hundreds to a thousand km, for example.

The plurality of satellites 100 provided in the phased array antenna 1 may perform a formation flight of flying on a GCO (General Circular Orbit) or on a record disk orbit by flying on a predetermined circular orbit. Each of the satellites 100 constituting the phased array antenna 1 may fly such that the disposition of each of the satellites 100 rotates on a virtual plane (rotational plane) without changing relative positional relationship among themselves in the formation flight.

At least some of the satellites 100 provided in the phased array antenna 1 may constitute a phased array antenna for reception and receive a signal transmitted from a transmitter. In addition, at least some of the satellites 100 provided in the phased array antenna 1 may constitute a phased array antenna for transmission and transmit a signal to a receiver. The phased array antenna 1 may relay communication between the transmitter and the receiver. That is, the phased array antenna for transmission may generate a signal on the basis of a signal generated upon reception by the phased array antenna for reception of a signal from the transmitter and transmit it to the receiver. It is to be noted that the phased array antenna 1 may include a plurality of phased array antennas for reception and / or a plurality of phased array antennas for transmission which can be constituted by the plurality of satellites 100. With respect to the plurality of phased array antennas for reception and / or the plurality of phased array antennas for transmission, each of them may perform communication with ground stations (the transmitter and / or the receiver grounded on the ground), individually.

The transmitter and the receiver are not particularly limited. For example, the transmitter and the receiver may be a mobile station such as a smartphone or the like. In this case, at least some of the satellites 100 of the phased array antenna 1 may constitute a service link with the mobile station (the transmitter and / or the receiver). In addition, for example, the transmitter and the receiver may be base stations. In this case, at least some of the satellites 100 of the phased array antenna 1 may constitute a feeder link with the base station (the transmitter and / or the receiver). It is to be noted that the transmitter and the receiver may be collectively provided in one device.

### (1-1) Array Element Satellite 110

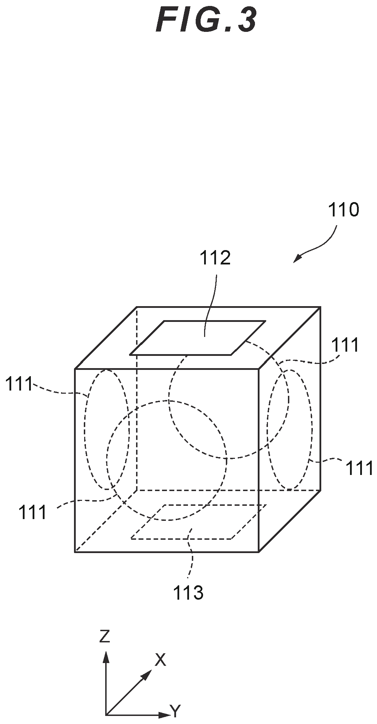

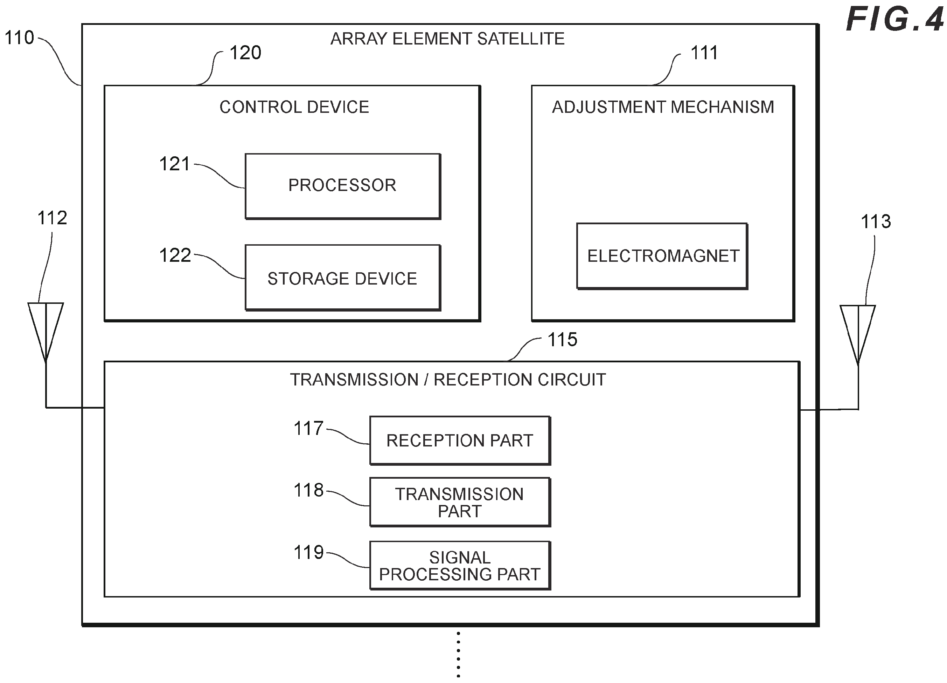

With reference to Figure 2 to Figure 4, the constitution of the array element satellite 110 will be explained. Figure 3 is a schematic diagram of the array element satellite 110 according to this Embodiment. In addition, Figure 4 is a block diagram illustrating a constitution of the array element satellite 110 according to this Embodiment. The array element satellite 110 includes an adjustment mechanism 111, an antenna 112 (an example of a first transmission / reception part), an antenna 113 (an example of a second transmission / reception part), a transmission / reception circuit 115, and a control device 120. In this Embodiment, the array element satellite 110 presents a rectangular shape, but this is not limiting but may be a spherical shape or a cylindrical shape.

The adjustment mechanism 111 is a mechanism for adjusting a position and an attitude of the array element satellite 110. Each of the array element satellites and the control satellite 200 adjust the relative positions and attitudes by the adjustment mechanism 111. In the case of an ultrasmall-sized array element satellite 110 which performs a formation flight, the adjustment mechanism 111 may include an electromagnet. By means of the electromagnet, the relative positions between the neighboring satellites 100 are adjusted by a magnetic force, and such control can be executed that a desired array shape is maintained. At this time, the adjacent array element satellites 110 are preferably disposed within a range in which a magnetic field by the electromagnet can affect each other. The magnetic field generated by the electromagnet acts on the adjustment mechanism 111 provided in the closest array element satellite 110 but rarely acts on the satellite 100 disposed at a position farther than that. Therefore, adjustment of the relative positions or relative attitudes with respect to the adjacent array element satellites 110 can be performed. As described above, by using the electromagnet for the adjustment mechanism 111, non-wired connection between the satellites 100 can be realized by a simple constitution. Therefore, it contributes to size- and weight-reduction and cost reduction of the phased array antenna 1. It is to be noted that the adjustment mechanism 111 is not limited to those using a driving power by the electromagnet but may be a thruster, a propeller or the like, for example. In addition, in the Embodiment exemplified in Figure 3, the adjustment mechanism 111 is provided one for each surface of four surfaces facing in the X-axis direction and the Y-axis direction of the array element satellite 110, but this is not limiting. For example, a plurality of the adjustment mechanisms 111 may be provided on one surface, or the adjustment mechanism 111 may be provided on surfaces facing the Z-axis direction, which is a vertical direction.

The antenna 112 and the antenna 113 receive a radio wave (one example of a signal) transmitted from a transmission source including the control satellite 200 and output it to the transmission / reception circuit 115. In addition, the radio wave generated by the transmission / reception circuit 115 is output to an outside via the antenna 112 and the antenna 113.

The antenna 112 is provided on any one of the surfaces of the array element satellite 110. Each of the antennas 112 of the plurality of array element satellites 110 is disposed along the same plane and forms one large antenna surface. In this Embodiment, as shown in Figure 2, the antenna 112 is provided on one surface on the upper-sky side / Z-axis positive direction side of each of the array element satellites 110 and forms an antenna surface 300A on the XY plane. The directivity of the antenna surface 300A is determined by an excitation weight of each of the antennas 112.

The antenna 113 is provided on a surface facing the surface on which the antenna 112 is provided in the array element satellite 110. That is, the antenna 112 and the antenna 113 are positioned on the sides facing each other in the array element satellite 110. Each of the antennas 113 of the plurality of array element satellites 110 is disposed along the same plane and forms one large antenna surface. In this Embodiment, the antenna 113 is provided on one surface on the ground side / Z-axis negative direction side of each of the array element satellites 110, and as shown in Figure 2, an antenna surface 300B is formed on the XY plane. As described above, by means of the antenna surface 300B formed on the ground side, a signal from the transmission source installed on the ground is received. The directivity of the antenna surface 300B is determined by an excitation weight of each of the antennas 113.

The transmission / reception circuit 115 includes a reception part 117, a transmission part 118, and a signal processing part 119. The transmission / reception circuit 115 executes predetermined signal processing to the signal input from the antenna 112 or the antenna 113 and outputs the signal for which the signal processing has been executed to the antenna 112 or the antenna 113.

The reception part 117 executes predetermined signal processing to the output signal from the antenna 112 or the antenna 113. The reception part 117 is constituted by a low-noise amplifier, for example, and may amplify the output signal from the antenna 112.

Transmission part 118 is constituted by a power amplifier and the like, amplifies the output signal from the signal processing part 119 and outputs it to the antenna 112 or the antenna 113.

The signal processing part 119 may include a function of executing phase shift / modulation / demodulation and the like of a signal, for example. As a result, the signal processing part 119 controls a phase and an amplitude of a signal in the transmission / reception circuit 115 so that the excitation weight of each of the antenna 112 and antenna 113 becomes a desired value. The desired value may be calculated by the control device 120 or the signal processing part 119 or may be acquired from the other devices (other array element satellites 110, the control satellite 200, the other satellites 100, the ground device or the like). The signal processing part 119 may control the transmission / reception circuit 115 so that a phase difference of the received signal of each antenna 112 or a phase difference of the received signal of each antenna 113 between the plurality of array element satellites 110, for example, is compensated. The signal processing part 119 may execute the above-described control in order to compensate not only for a phase difference caused by a difference in a position of each of the plurality of array element satellites 110 but for a phase difference caused by variation of the array element satellites 110 as individuals (including information measured before the launch or the like of the array element satellite 110). As a result, the directivities of the antenna surface 300A and the antenna surface 300B can be controlled to a desired direction.

In addition, as a phase shift processing, for example, at least on the basis of a distance between the control satellite 200 and the array element satellite 110, the phase of the signal may be changed. As a result, the directivity of the array element satellite 110 can be controlled to be directed to the direction of the control satellite 200.

The control device 120 is a device for controlling an operation of the entire array element satellite 110. Specifically, the control device 120 controls a position and an attitude of the array element satellite 110 by controlling the adjustment mechanism 111. In addition, the control device 120 controls communication between the array element satellite 110 and the other devices (the other array element satellites 110, the control satellite 200, the other satellites 100, the ground station, and the like, for example). Moreover, the control device 120 executes various types of signal processing and various types of information processing.

The control device 120 includes one or a plurality of processors 121 (hereinafter, referred to simply as a "processor 121") and one or a plurality of storage devices 122 (hereinafter, referred to simply as a "storage device 122"). The processor 121 includes a CPU (Central Processing Unit) and the like and executes various types of information processing. The storage device 122 stores various types of information required for processing by the processor 121. A control program is stored in the storage device 122. The control program is a computer program executed by the processor 121, and the function of the control device 120 is realized by cooperation between the processor 121 and the storage device 122. The control program may be recorded in a computer-readable recording medium.

### (1-2) Control Satellite 200

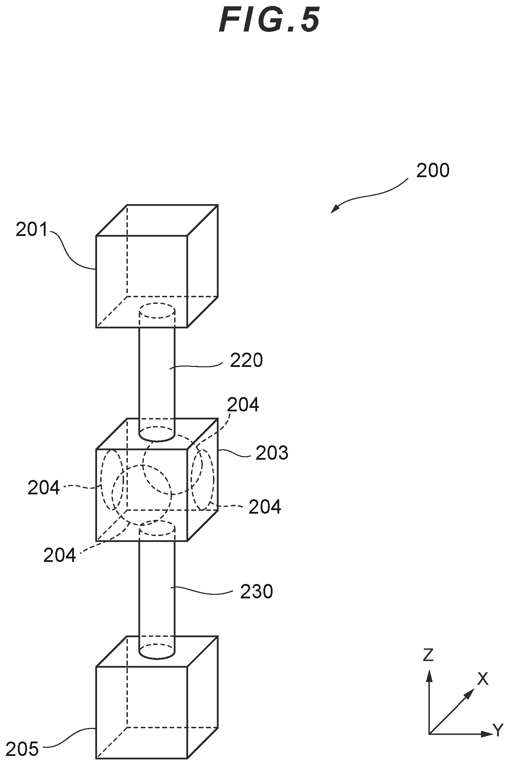

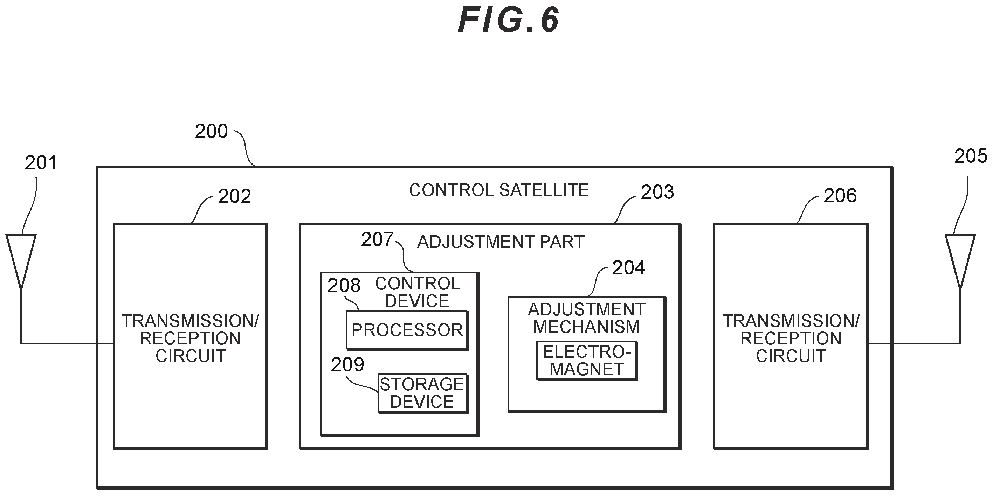

Subsequently, with reference to Figure 5 and Figure 6, the constitution of the control satellite 200 will be explained. Figure 5 is a schematic diagram of the control satellite 200 according to this Embodiment. In addition, Figure 6 is a block diagram illustrating the configuration of the control satellite 200 according to this Embodiment. The control satellite 200 has an adjustment part 203, an antenna 201 (an example of a first communication part), and an antenna 205 (an example of a second communication part).

The adjustment part 203 incorporates an adjustment mechanism 204 (an example of the second adjustment mechanism), and a control device 207. In this Embodiment, the adjustment part 203 presents a rectangular shape, but this is not limiting, and it may be a spherical or cylindrical shape. In addition, it may be a part of the control satellite 200 which is integrated in the cylindrical shape or the rectangular shape as a whole.

The adjustment mechanism 204 is a mechanism for adjusting a position and an attitude of the control satellite 200 including the adjustment part 203. In addition, the adjustment mechanism 204 can also perform adjustment of the relative position and the relative attitude with the adjacent array element satellite 110. When the phased array antenna 1 is constituted by a satellite as in this Embodiment, the adjustment mechanism 204 may include an electromagnet. As shown in Figure 2, the adjustment part 203 and the adjustment mechanism 204 are disposed along a plane on which the adjustment mechanisms 111 of the array element satellites 110 are aligned. A magnetic field generated by the electromagnet acts on the adjustment mechanism 111 of the closest array element satellite 110 but rarely affects the adjustment mechanism 111 or the adjustment mechanism 204 disposed at positions farther away. Therefore, it becomes possible to adjust the relative positions or the relative attitudes between the adjustment part 203 and the adjacent array element satellite 110. As a result, the relative position with respect to the array element satellite 110 can be finely adjusted, and the array formation as a whole can be supported. That is, the phased array antenna 1 including the control satellite 200 and the array element satellite 110 can be constituted in a non-wired manner. At this time, the adjustment mechanism 204 of the adjustment part 203 and the adjustment mechanism 111 of the array element satellite 110 do not have to be disposed strictly on the same plane but may be disposed by being shifted in the Z-axis direction within a range in which magnetic fields by the electromagnet can influence each other. As described above, by using an electromagnet for the adjustment mechanism 204, the non-wired connection between the array element satellite 110 and the control satellite 200 can be realized in a simple constitution. Therefore, it is possible to contribute to reduction in a size and a weight and a cost of the phased array antenna 1. It is to be noted that the adjustment mechanism 204 may be a thruster, a propeller or the like, for example. In the Embodiment exemplified in Figure 5, the adjustment mechanism 204 is provided one on each surface on the four surfaces facing in the X-axis direction and the Y-axis direction, but this is not limiting. For example, a plurality of the adjustment mechanisms 204 may be provided on one surface, and the adjustment mechanism 204 may be further provided in the vertical direction.

The antenna 201 is a reception part of a radio wave in the control satellite 200 and a transmission part of a radio wave transmitted from the control satellite 200. The antenna 201 is connected to a transmission / reception circuit 202. The radio wave generated by the transmission / reception circuit 202 is output to an outside via the antenna 201. In addition, a radio wave is input into the transmission / reception circuit 202 from the outside via the antenna 201. The antenna 205 is similarly a reception part of a radio wave in the control satellite 200 and a transmission part of a radio wave transmitted from the control satellite 200. The antenna 205 is connected to a transmission / reception circuit 206. The radio wave generated by the transmission / reception circuit 206 is output to the outside via the antenna 205.

For each of the antennas 112, 113, 201, and 205, an arbitrary constitution such as a patch antenna, a horn antenna, a dipole antenna or the like can be adopted, but in order to acquire a higher gain as a phased array antenna formed by a plurality of the array element satellites 110, such a shape that the directivity can be easily controlled (e.g.: an array of patch antennas, an array of slot antennas and the like) is preferably used. At least some of the antennas 112, 113, 201, and 205 may be constituted to be switchable by a switch, not shown, between a signal path for reception and a signal path for transmission.

In this Embodiment, the antenna 201 is connected to the adjustment part 203 by a connection part 220 and is disposed away from the adjustment part 203 in a Z-direction by a predetermined distance. In addition, the antenna 205 is disposed on a side opposite to the antenna 201 in the Z-direction with the adjustment mechanism 204 as a reference. The antenna 205 is disposed away from the adjustment part 203 in the Z-direction by a predetermined distance. The antenna 201 and the antenna 205 may include an electromagnet or may maintain relative positions with respect to the adjustment part 203 constant not by a connection part but by a magnetic force. In the example illustrated in Figure 3, the antenna 201 is disposed on the upper-sky side / Z-axis positive direction side, and the antenna 205 is disposed on the ground side / Z-axis negative direction side. Therefore, when the antenna 201 performs communication with the array element satellite 110, it is preferable that it performs transmission / reception of a radio wave with the antenna 112 disposed on the upper sky side of the array element satellite 110. In addition, it is preferable that the antenna 205 performs transmission / reception of a radio wave with the antenna 113 disposed on the ground side of the array element satellite 110.

As described above, the antenna 201 is disposed away from the antenna surface 300A in a direction crossing the antenna surface 300A with a predetermined distance. In addition, the antenna 205 is disposed away from the antenna surface 300B in a direction crossing the antenna surface 300B with a predetermined distance. As a result, the control satellite 200 can communicate with the plurality of array element satellites 110 disposed on the same plane as the control satellite 200 without shielding a signal. Therefore, the control satellite 200 can broadcast a radio wave to the plurality of array element satellites 110 and aggregate the radio waves from the plurality of array element satellites 110. At this time, the farther the distance between the antenna 201, the antenna 205, and the adjustment part 203 is, with the more array element satellites 110, the control satellite 200 can communicate. In addition, the distance between the antenna 201 and the adjustment part 203 and the distance between the antenna 205 and the adjustment part 203 may be the same or may be different.

In this Embodiment, the antenna 201 and the antenna 205 are physically coupled with the adjustment part 203 by the connection parts 220, 230, and relative distances among the antenna 201, the adjustment part 203, and the antenna 205 are fixed. As a result, the antenna 201 and the antenna 205 can be disposed even within a range where a magnetic field does not reach. Therefore, as compared with the case where the antenna 201 and the antenna 205 are maintained by an electromagnet, the antenna 201 and the antenna 205 can be disposed at positions farther away from the adjustment part 203. In this Embodiment, the antenna 201 is disposed on the upper sky side and the antenna 205 on the ground side, but the vertical direction may be opposite. It is to be noted that an outer shape of the control satellite 200 is not limited to the example in which a rectangular machine bodies are connected by a rod-shaped connecting part as illustrated in Figure 3 but may present a cylindrical shape, an oval shape, or a rectangular shape as a whole.

The control device 207 is a device for controlling an operation of the entire control satellite 200. Specifically, the control device 207 controls a position and an attitude of the control satellite 200 by controlling the adjustment mechanism 204. In addition, the control device 207 controls communication between the control satellite 200 and the other devices (the array element satellite 110, the other satellites 100, the ground stations and the like, for example). Moreover, the control device 207 executes various types of signal processing and various types of information processing.

The control device 207 includes one or a plurality of processors 208 (hereinafter, referred to simply as a "processor 208") and one or a plurality of storage devices 209 (hereinafter, referred to simply as a "storage device 209"). The processor 208 includes a CPU (Central Processing Unit) and the like and executes various types of information processing. In the storage device 209, various types of information required for processing by the processor 208 is stored. In the storage device 209, a control program is stored. The control program is a computer program executed by the processor 208, and by means of cooperation between the processor 208 and the storage device 209, functions of the control device 207 are realized. The control program may be recorded in a computer-readable recording medium.

### (2) Function of Control Satellite 200

Subsequently, usage examples of the control satellite 200 in the phased array antenna 1 will be explained. Since the control satellite 200 is capable of transmission / reception of a signal with a plurality of the array element satellites 110 as described above, it can perform various functions.

At this time, the transmission / reception circuit 202 of the control satellite 200 may control a phase or an amplitude of a signal generated by the transmission / reception circuit 202 so that the excitation weight of the antenna 201 has a desired value. In addition, at least on the basis of a distance between the antenna 201 and the antenna 112 of the array element satellite 110, for example, a phase of a signal to be generated may be determined. As a result, the directivity of the antenna 201 can be controlled so as to be directed to a direction of the array element satellite 110. In addition, the transmission / reception circuit 206 may control the phase and the amplitude of the signal generated by the transmission / reception circuit 206 such that the excitation weight of the antenna 205 has a desired value. Further, at least on the basis of a distance between the antenna 205 and the antenna 113 of the array element satellite 110, for example, a phase of the signal to be generated may be determined. As a result, the directivity of the antenna 205 can be controlled so as to be directed to the direction of the array element satellite 110.

It is to be noted that the distance between the antenna 201 and the antenna 112 of the array element satellite 110 and the distance between the antenna 205 and the antenna 113 of the array element satellite 110 may be calculated on the basis of the relative positional relationship between the antenna 201, the array element satellite 110, and the antenna 205. In the calculation, for example, a distance measuring sensor (an example of a distance measuring means) may be mounted on the array element satellite 110 or the control satellite 200, and a distance measured by using the distance measuring sensor may be used. Alternatively, by transmitting / receiving signals between the array element satellite 110 and the control satellite 200 and by measuring the intensity of the signals, the relative position between them may be estimated. In addition, in the calculation, information on the absolute positions of the antenna 201, the array element satellite 110, and the antenna 205 may be used. For example, the array element satellite 110 or the control satellite 200 may acquire information on its own position and attitude in the absolute coordinate system using a known method. For example, the array element satellite 110 or the control satellite 200 may acquire information on its own position and attitude in the absolute coordinate system by imaging the sun, the moon, the earth, or fixed stars using a camera.

At this time, it is desirable that the relative positions between the adjustment part 203 of the control satellite 200 and the antenna 201 are fixed by the connection part 220. As a result, the position of the antenna 201 of the control satellite 200 can be maintained constant in a plan view of the antenna surface 300A. In addition, an angle of the antenna 201 with respect to the antenna surface 300A can be maintained constant. As described above, since the relative positions of adjustment part 203 and the antenna 201 are fixed by the connection part 220, fluctuation caused by disturbance does not have to be considered for the distance between the adjustment part 203 and the antenna 201. As a result, when the directivity of the antenna 201 is to be controlled on the basis of the distance to the array element satellite 110, grasping of the distance and phase control can be executed easily. In addition, the same applies to the antenna 205, the connection part 230, and the antenna surface 300B.

### (2-1) Calibration

By using the control satellite 200, an error in the signal processing by each of the array element satellites 110 is measured, and calibration can be executed by using the measured error. In a conventional wired-type phased array antenna, calibration for measuring / correcting a phase error caused by a disposition error of the array element or variation in an internal circuit is executed. In the wired-type phased array antenna, the array elements are physically coupled and thus, it is only necessary to execute the calibration of the phase error caused by the disposition error of the array element at manufacturing. On the other hand, in the non-wired phased array antenna as the present invention, there is such a case in which disposition of the array element satellites 110 is shifted due to disturbance or the like on the orbit. Therefore, there is a concern that a measurement result of an error becomes invalid, and it is difficult to continuously use the calibration result at the manufacture. In addition, a phase error can occur also due to deterioration of an internal circuit or the like, but in the wired-type phased array antenna, it is difficult to execute calibration on a real-time basis during the operation. According to this Embodiment, real-time calibration can be executed for the phased array antenna 1 in operation without using a ground station or the like exclusively for calibration.

In the processing executed by the transmission / reception circuit 115 of the array element satellite 110, the error measurement is performed for two parts, that is, a path R1 for processing a signal received by the antenna 113 and outputting it to the antenna 112 and a path R2 for processing a signal received by the antenna 112 and outputting it to the antenna 113, which is a path reverse to the above.

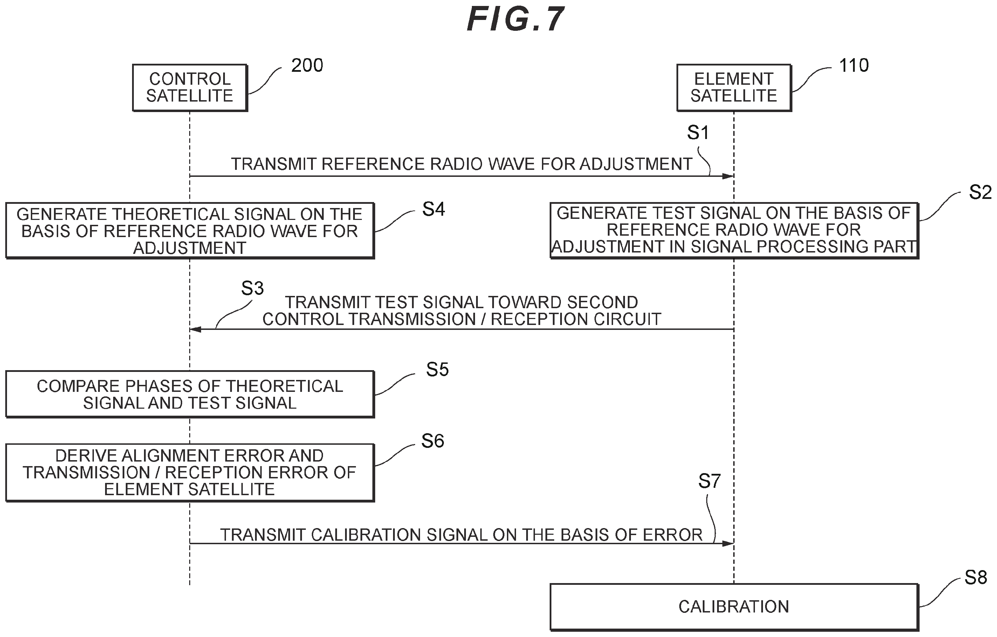

With reference to Figure 2 and Figure 7, a procedure for error measurement in the path R1 in which a signal received by the antenna 113 is processed and output to the antenna 112. Since the error measurement in the path R2 can be performed substantially in the same manner as the error measurement in the path R1 by reversing the paths and the antennas for transmission and reception, the explanation thereof will be omitted.

The transmission / reception circuit 206 of the control satellite 200 outputs a reference signal 31 for adjustment to the antenna 205. The antenna 205 transmits the reference signal 31 for adjustment output from the transmission / reception circuit 206 toward the antenna 113 of the array element satellite 110, which is a measurement target (S1). The antenna 113 outputs the reference signal 31 for adjustment to the transmission / reception circuit 115. The transmission / reception circuit 115 executes predetermined signal processing to the reference signal 31 for adjustment by the reception part 117, the transmission part 118, and the signal processing part 119 and generates a test signal 32 (S2). The transmission / reception circuit 115 outputs the test signal 32 to the antenna 112. The antenna 112 transmits the input test signal 32 toward the antenna 201 of the control satellite 200 (S3). As described above, by vertically separating a transmission / reception surface of the reference signal 31 for adjustment and a transmission / reception surface of the test signal 32, such a situation that transmission / reception from the array element satellite 110 are coupled can be avoided more easily.

At this time, the storage device 209 of the control satellite 200 acquires adjustment time information t, which is information related to transmission time of the reference signal 31 for adjustment, from the transmission / reception circuit 206. In addition, the storage device 209 stores a reference relative distance L1 between the antenna 205 and the antenna 113 and a reference relative distance L2 between the antenna 112 and the antenna 201. Moreover, the storage device 209 stores a reference correction value 33 of each of the array element satellites 110. The reference correction value 33 may include transmission / reception characteristics of each of the array element satellites 110, the reference relative distances L1, L2, the adjustment time information t and a wavelength λ of the reference signal 31 for adjustment and the like, for example. The transmission / reception characteristics may be an error in lengths of feed lines between each of the antennas of each of the array element satellites 110 and the transmission / reception circuit 115 measured in an inspection before shipment of the phased array antenna 1, a loss due to radome or the like, for example. The reference relative distances L1, L2 are relative distances between each of the satellites 100 measured in the inspection before shipment of the phased array antenna 1, for example.

The processor 208 of the control satellite 200 executes machining processing by the reference correction value 33 to the reference signal 31 for adjustment and generates a theoretical signal 34 (S4). A characteristic value of the theoretical signal 34 is a theoretical value when the reference signal 31 for adjustment is transmitted to the antenna 113 of the array element satellite 110, which is a measurement target, from the antenna 205, is applied with predetermined processing by the transmission / reception circuit 115, and is transmitted from the antenna 112 to the antenna 201 of the control satellite 200.

However, in actuality, an actual relative distance between each of the array element satellites 110 and the control satellite 200 might deviate from the reference relative distances L1, L2 due to disturbance during orbit operation or the like. In addition, due to secular variation or the like in a length of the feed line connecting the transmission / reception circuit 115 and the antennas 112, 113, an actual phase error could be different from a phase correction value by the reference correction value 33. Therefore, an error could occur in a phase of the theoretical signal 34 and a phase of the test signal 32. The processor 208 of the control satellite 200 compares the phase of the theoretical signal 34 and the phase of the test signal 32 (S5). By comparing the theoretical signal 34 and the test signal 32, a phase error generated in the processing executed in the path R1 of the array element satellite 110, which is a measurement target, can be measured. From this phase error, alignment error and a transmission / reception error generated in the array element satellite 110, which is a measurement target, can be derived (S6). It is to be noted that the processor 208 may measure an amplitude error or a frequency error generated in the processing executed in the path R1.

Moreover, the processor 208 of the control satellite 200 updates the reference correction value 33 on the basis of the measured error. The control satellite 200 transmits the updated reference correction value 33 as a calibration signal to the array element satellite 110, which is a measurement target (S7). The array element satellite 110 receives the updated reference correction value 33 and stores it in the storage device 122. As described above, the error in the signal processing of the array element satellite 110 is measured, and the calibration reflecting the error on the real-time basis can be performed.

Moreover, since the phased array antenna 1 in this Embodiment is non-wired, the disposition of each of the satellites 100 can be freely adjusted. Therefore, by changing the disposition of the satellite 100 so as to compensate a measured phase error, calibration can be performed on the real-time basis while the phased array antenna 1 is operated on the orbit (S8).

As described above, in the present invention, the calibration of the array element satellite 110 can be performed under the same operation conditions (disposition, attitude, frequency condition and the like) as those in the actual communication with the ground.

In addition, the phased array antenna 1 may include a plurality of the control satellites 200 and transmit a reference radio wave for adjustment from the plurality of control satellites 200 to the array element satellite 110, which is a measurement target. Moreover, a plurality of the control satellites 200 may be disposed in a mesh state so as to gain an equal interval on the XY plane. As a result, it becomes possible to transmit a reference radio wave for adjustment from different angles to the same array element satellite 110. Thus, more accurate characteristic evaluation can be made. Furthermore, when it is assumed that the distance between the adjustment part 203 and the antenna 201 and the distance between the adjustment part 203 and the antenna 205 are L, respectively, each of the control satellites 200 may be disposed so that intervals on the XY plane become equal at L / 2 or less. As a result, the reference radio wave for adjustment can be radiated from angles which can actually occur comprehensively to the array element satellite 110, which is a measurement target, more accurate characteristic evaluation can be made.

### (2-2) Synthesis of Signals

In a conventional wired-type phased array antenna, each of the array elements receives a signal transmitted from the ground transmitter. At this time, weak signals transmitted from the ground is amplified by aligning phases of the received signals and synthesizing them in each of the array elements. In the present invention, since each of the array element satellites 110 is not connected by electric wiring, a method of synthesizing signals in a non-wired manner needs to be provided.

In this Embodiment, the signals transmitted by each of the array element satellites 110 of the phased array antenna 1 can be synthesized in the control satellite 200. Here, a method of synthesizing signals transmitted from the antenna 112 of each of the array element satellites 110 toward the antenna 201 of the control satellite 200 will be explained, but this is not limiting. For example, similarly, signals transmitted from the antenna 113 of each of the array element satellites 110 toward the antenna 205 of the control satellite 200 can be also synthesized. When each of the array element satellites 110 synthesizes the signals from the ground transmitter, in the control satellite 200, it is preferable that the communication is performed by the antenna 112 located on the upper sky side and the antenna 201. As a result, coupling of the signal transmitted from the ground and the signal transmitted from each of the array element satellites 110 to the control satellite 200 can be avoided.

Each of the array element satellites 110 may determine the phase of the signal at least on the basis of the distance between each of the antennas 112 and the antenna 201. Particularly, each of the array element satellites 110 may determine the phase of the signal such that a difference in the distance between the antenna 201 and each of the antennas 112 is compensated, for example. As a result, the directivity of the antenna surface 300A can be controlled so as to be directed to the direction of the antenna 201, and the signals transmitted from each of the antennas 112 can be made to have the equal phases. At this time, the transmitted signal may be a signal obtained by executing processing such as phase shift to a signal received from the outside such as a ground transmitter or may be a signal generated by each of the array element satellites 110.

Furthermore, it is assumed that the signal from each of the array element satellites 110 transmits information by amplitude modulation. As a result, the signals from each of the array element satellites 110 are synthesized in space before they reach the control satellite 200. As a result, the antenna 201 of the control satellite 200 can receive a signal obtained by synthesizing the signals from each of the array element satellites 110, and even in the non-wired phased array antenna, signals transmitted from each of the array element satellites 110 can be synthesized.

### (2-3) Transmission of Signal

A signal to be transmitted by each of the array element satellites 110 can be broadcasted from the control satellite 200 to each of the array element satellites 110. Each of the array element satellites 110 transmits a signal to a target receiver on the basis of the signal broadcasted from the control satellite 200.

At this time, the control satellite 200 generates a modulated radio wave obtained by modulating a reference frequency signal, which is baseband information, and broadcasts it to each of the array element satellites 110. As a result, there is such an advantage that synchronization of transmission timing of the modulated wave becomes unnecessary as compared with the case where the modulated radio wave is generated by each of the array element satellites 110 after the reference frequency signal was broadcasted from the control satellite 200. In addition, a local oscillator of each of the array element satellites 110 is not required, either.

Each of the array element satellites 110 performs a phase shift of the modulated radio wave at least on the basis of the distance between the antenna of the control satellite 200 which transmitted the modulated radio wave and the antenna of the array element satellite 110 which received the modulated radio wave. As a result, it becomes possible to align the phases of the received modulated radio waves among all the array element satellites 110. Furthermore, each of the array element satellites 110 performs a phase shift of the modulated radio wave at least on the basis of a distance between an antenna of the array element satellite 110 which transmits the modulated radio wave and the receiver.

### (3) Variation

A variation of the phased array antenna 1 will be explained. In this variation, light (visible light or laser) is used instead of radio waves for signal communication between the antennas 113 of the plurality of array element satellites 110 and the antenna 205 of the control satellite 200.

In the phased array antenna 1 according to this variation, the array element satellite 110 can include a light projecting / receiving part 153 (an LED for LiFi, a laser diode, or the like) instead of the conventional antenna 113. This allows the array element satellite 110 to communicate with the control satellite 200 using optical signals. The control satellite 200 accurately receives the optical signal from the array element satellite 110 by including a light projecting / receiving part 255 instead of the antenna 205.

In this Embodiment, by adopting the optical communication, the transmission / reception of signals of the phased array antenna 1 are speeded up. Since an optical signal has a higher frequency than a radio wave and can transmit a larger amount of data, the entire communication capacity can be drastically improved. In addition, by using laser communication with high directivity, it becomes possible to reduce unnecessary interference occurring in radio-wave communication and to realize more stable data transmission.

As described above, in this variation, it becomes possible to provide a communication environment at a higher speed and with less interference as compared with the conventional radio-wave communication by utilizing the optical communication art.

### (4) Others

In the above-described Embodiments, the phased array antenna 1 is constituted by including the satellites 100 as an example of a flying object. However, the phased array antenna 1 is not limited to the satellite 100 flying in space but may be constituted by an arbitrary flying object (an airplane, a drone or the like) that flies in the atmosphere.

The Embodiments described above are intended to facilitate the understanding of the present invention and are not intended to limit the interpretation of the present invention. Each of the elements included in the Embodiment and the dispositions, materials, conditions, shapes, sizes, and the like thereof are not limited to those exemplified but can be changed as appropriate. In addition, the constitutions illustrated in different Embodiments can be partially replaced or combined.

### (Appendix 1)

A phased array antenna including:
a plurality of first flying objects disposed in an array state on a same plane; and
at least one second flying object, in which
each first flying object of the plurality of first flying objects includes:
   a first transmission / reception part disposed along the same plane;
   a first adjustment mechanism which adjusts relative positions and attitudes between the flying objects, in which
   the second flying object includes:
      a second adjustment mechanism which adjusts relative positions and attitudes between the flying objects and which is disposed along alignment of the first adjustment mechanism of each of the plurality of first flying objects; and
      a first communication part which is separated from the second adjustment mechanism only by a predetermined distance in a direction crossing the same plane on a side of the first transmission / reception parts of the plurality of first flying objects, and the relative position of which with respect to the second adjustment mechanism is fixed, and moreover which performs communication with the first transmission / reception part of at least one first flying object in the plurality of first flying objects.

### (Appendix 2)

The phased array antenna described in Appendix 1, in which
the plurality of first flying objects further include:
second transmission / reception parts located on an opposite side to the first transmission / reception parts;
the second flying object further includes:
   a second communication part which is separated from the second adjustment mechanism only by a predetermined distance in a direction crossing the same plane on a side of the second transmission / reception parts of the plurality of first flying objects, and the relative position of which with respect to the second adjustment mechanism is fixed, and moreover which performs communication with the second transmission / reception part of at least one first flying object in the plurality of first flying objects.

### (Appendix 3)

The phased array antenna described in Appendix 2 or Appendix 3, in which
the plurality of first transmission / reception parts in the plurality of first flying objects constitute a first transmission / reception surface facing the first communication part; and
the plurality of second transmission / reception parts in the plurality of first flying objects constitute a second transmission / reception surface facing the second communication part.

### (Appendix 4)

The phased array antenna described in Appendix 3, in which
either one of the first transmission / reception surface and the second transmission / reception surface is located to face the ground.

### (Appendix 5)

The phased array antenna described in any one of Appendix 1 to Appendix 4, in which
at least one second flying object is of a plurality of the second flying objects; and
disposed such that an interval between the respective second adjustment mechanism of the plurality of second flying objects is an equal interval in a direction along the same plane.

### (Appendix 6)

The phased array antenna described in Appendix 5, in which
an interval between the respective second adjustment mechanisms of the plurality of second flying objects is equal to or smaller than 1/2 of a distance between the first communication part and the same plane.

### (Appendix 7)

The phased array antenna described in Appendix 1 to Appendix 6, in which
the second flying object has a distance measuring means.

### (Appendix 8)

The phased array antenna described in any one of Appendix 1 to Appendix 7, in which
the first flying object and the second flying object communicate with each other by radio waves.

### (Appendix 9)

The phased array antenna described in any one of Appendix 1 to Appendix 7, in which
the first flying object and the second flying object communicate with each other by an optical signal.

### (Appendix 10)

The phased array antenna described in any one of Appendix 2 to Appendix 9, in which
at least one first flying object of the plurality of first flying objects further includes:
a transmission / reception circuit that executes input and output of a signal via the first transmission / reception part and the second transmission / reception part,
the second flying object further includes:
   error measuring means for measuring a phase error of a signal with respect to at least one first flying object,
   the second flying object transmits a reference signal for adjustment to at least one first flying object,
   at least one first flying object transmits to the second flying object a test signal generated on the basis of the reference signal for adjustment, and
   the error measuring means measures a disposition error of the first flying object and an error of the transmission / reception circuit on the basis of the test signal received from at least one first flying object.

### (Appendix 11)

The phased array antenna described in Appendix 10, in which
the second flying object performs calibration on the basis at least one first flying object based on the error measured by the error measuring means.

### (Appendix 12)

The phased array antenna described in Appendix 10 or Appendix 11, in which
the second flying object transmits a reference signal for adjustment from either one of the first communication part and the second communication part and receives the test signal from the other of the first communication part and the second communication part.

### (Appendix 13)

A calibration method which is a method of calibrating a phased array antenna including:
a plurality of first flying objects disposed in an array state on a same plane; and
at least one second flying object, the method including:
   transmitting by the second flying object a reference signal for adjustment to at least one first flying object in the plurality of first flying objects;
   transmitting by at least one first flying object a test signal generated on the basis of the reference signal for adjustment to the second flying object;
   measuring a disposition error of the first flying object and an error of the transmission / reception circuit on the basis of the test signal received by the second flying object from at least one first flying object; and
   performing calibration of the at least one first flying object on the basis of the measured error by the second flying object.

### Reference Signs List

- 1: Phased array antenna
- 110: Array element satellite
- 200: Control satellite
- 100: Satellite
- 111: Adjustment mechanism
- 112: Antenna
- 113: Antenna
- 115: Transmission / reception circuit
- 120: Control device
- 300A, 300B: Antenna surface
- 117: Reception part
- 118: Transmission part
- 119: Signal processing part
- 121: Processor
- 122: Storage device
- 201: Antenna
- 203: Adjustment part
- 205: Antenna
- 204: Adjustment mechanism
- 207: Control device
- 202: Transmission / reception circuit
- 206: Transmission / reception circuit
- 208: Processor
- 209: Storage device
- 31: Reference signal for adjustment
- 32: Test signal
- 33: Reference correction value
- 153: Light projecting / receiving part
- 255: Light projecting / receiving part
- L1, L2: Reference relative distance

## Claims

1. A phased array antenna, comprising:
a plurality of first flying objects disposed in an array state on a same plane; and
at least one second flying object, wherein
each first flying object of the plurality of first flying objects includes:
a first transmission / reception part disposed along the same plane; and
a first adjustment mechanism which adjusts a relative position and an attitude between the flying objects,
the second flying object includes:
a second adjustment mechanism which adjusts relative positions and attitudes between the flying objects and which is disposed along alignment of the first adjustment mechanism of each of the plurality of first flying objects; and
a first communication part which is separated from the second adjustment mechanism only by a predetermined distance in a direction crossing the same plane on a side of the first transmission / reception parts of the plurality of first flying objects, and the relative position of which with respect to the second adjustment mechanism is fixed, and moreover which performs communication with the first transmission / reception part of at least one first flying object in the plurality of first flying objects.

2. The phased array antenna according to claim 1, wherein
the plurality of first flying objects further include:
second transmission / reception parts located on an opposite side to the first transmission / reception part; and
the second flying object further includes:
a second communication part which is separated from the second adjustment mechanism only by a predetermined distance in a direction crossing the same plane on a side of the second transmission / reception parts of the plurality of first flying objects, and the relative position of which with respect to the second adjustment mechanism is fixed, and moreover which performs communication with the second transmission / reception part of at least one first flying object in the plurality of first flying objects.

3. The phased array antenna according to claim 2, wherein
a plurality of the first transmission / reception parts in the plurality of first flying objects constitute a first transmission / reception surface facing the first communication part; and
a plurality of the second transmission / reception parts in the plurality of first flying objects constitute a second transmission / reception surface facing the second communication part.

4. The phased array antenna according to claim 3, wherein
either one of the first transmission / reception surface and the second transmission / reception surface is located to face the ground.

5. The phased array antenna according to claim 1, wherein
the at least one second flying object is of a plurality of second flying objects; and
is disposed such that an interval between the respective second adjustment mechanisms of the plurality of second flying objects is an equal interval in a direction along the same plane.

6. The phased array antenna according to claim 5, wherein
an interval between the respective second adjustment mechanisms of the plurality of second flying objects is equal to or smaller than 1/2 of a distance between the first communication part and the same plane.

7. The phased array antenna according to claim 1, wherein
the second flying object has distance measuring means.

8. The phased array antenna according to claim 2, wherein
the first flying object and the second flying object perform communication by a radio wave.

9. The phased array antenna according to claim 2, wherein
the first flying object and the second flying object perform communication by an optical signal.

10. The phased array antenna according to claim 2, wherein
at least one first flying object of the plurality of first flying objects further includes:
a transmission / reception circuit that executes input and output of a signal via the first transmission / reception part and second transmission / reception part,
the second flying object further includes:
error measuring means for measuring a phase error of a signal with respect to the at least one first flying object,
the second flying object transmits a reference signal for adjustment to the at least one first flying object,
the at least one first flying object transmits to the second flying object a test signal generated on the basis of the reference signal for adjustment, and
the error measuring means measures a disposition error of the first flying object and an error of the transmission / reception circuit on the basis of the test signal received from the at least one first flying object.

11. The phased array antenna according to claim 10, wherein
the second flying object performs calibration with respect to the at least one first flying object on the basis of an error measured by the error measuring means.

12. The phased array antenna according to claim 10 or 11, wherein
the second flying object transmits the reference signal for adjustment from either one of the first communication part and the second communication part and receives the test signal from the other of the first communication part and the second communication part.

13. A calibration method of a phased array antenna, including:
a plurality of first flying objects disposed in an array state on a same plane; and
at least one second flying object, the method comprising:
transmitting by the second flying object a reference signal for adjustment to at least one first flying object of the plurality of first flying objects;
transmitting by the at least one first flying object a test signal generated on the basis of the reference signal for adjustment to the second flying object;
measuring a disposition error of the first flying object and an error of a transmission / reception circuit on the basis of the test signal received by the second flying object from the at least one first flying object; and
performing calibration of the at least one first flying object on the basis of a measured error by the second flying object.
